# DEMANDE DE BREVET EUROPEEN

(11) **EP 2 193 952 A1**
(43) Date de publication de la demande: **09.06.2010**
(21) Numéro de dépôt: 09177791.2
(22) Date de dépôt: 02.12.2009
(51) Int. Cl.: B60K 37/02

(54) **Tableau de bord de véhicule automobile comprenant une boîte à lumière perfectionnée**

(30) Priorité: 08.12.2008 FR 0858349
(71) Demandeur: MAGNETI MARELLI FRANCE, 92000 Nanterre (FR)
(72) Inventeur: Richer, Sébastien, Bloomfield Hills, MI 48301 (US); Allegretto, Gianluca, Birmingham, MI 48009 (US); Neri, Ronnie, Windsor Ontario (CA)
(74) Mandataire: Texier, Christian

(57) **Abrégé**

La présente invention concerne un tableau de bord (1) de véhicule automobile comprenant une boite à lumière (30), des moyens indicateurs (22), et un élément de boitier de façade (50), ledit tableau de bord (1) étant **caractérisé en ce que** ladite boite à lumière (30) est au moins en partie visible (51) du conducteur dudit véhicule automobile, ladite boîte à lumière (30) étant éclairée, et en ce que ladite boîte à lumière (30) comprend des cavités ayant une forme globalement de calotte sphérique (40) comprenant des sources d'éclairage et dans lesquelles sont disposés lesdits moyens indicateurs (22).

## Description

### DOMAINE TECHNIQUE GENERAL :

L'invention concerne le domaine des tableaux de bord de véhicule automobile.

### ETAT DE L'ART :

Les tableaux de bord actuels sont composés d'une multitude de composants assemblés afin d'obtenir un ensemble final, chacun des multiples composants remplissant des fonctions spécifiques.

Plus précisément les tableaux de bord connus comprennent généralement au moins :
- un boitier arrière,
- un circuit imprimé, placé dans le boitier arrière et qui porte des composants électriques, des sources lumineuses et des actionneurs d'aiguilles indicatrices,
- une boite à lumière placée en avant du circuit imprimé et associée aux sources lumineuses pour diriger vers l'avant la lumière reçue de celles-ci,
- un ou plusieurs cadrans gradués associés aux aiguilles indicatrices,
- une vitre avant, et
- un élément de boitier avant complémentaire du boitier arrière.

Les tableaux de bord actuels ont donc, en raison de la multiplicité des composants, une structure complexe et une épaisseur importante.

En particulier, les tableaux de bord sont des pièces particulièrement exigeantes en ce qui concerne l'éclairage. En effet, on comprend aisément l'importance d'un bon éclairage sur le tableau de bord de véhicule automobile, tant au niveau sécuritaire qu'au niveau commercial ou esthétique.
Dans les solutions actuelles, un élément de boitier avant, une vitre et des cadrans couvrent l'ensemble de la surface du tableau de bord visible par le conducteur. Les solutions actuelles utilisent une boite à lumière associée avec une multitude de sources lumineuses, par exemple des diodes disposées sur un support, généralement un circuit imprimé pour éclairer par transparence les différentes zones du tableau de bord. Cette solution, en plus d'entrainer une structure complexe du tableau de bord, est coûteuse en raison des nombreux éléments requis.

Par ailleurs, malgré de nombreuses recherches en la matière, l'architecture générale des tableaux de bord n'a pas évolué depuis de nombreuses années. Il existe pourtant une demande constante d'évolution de la part de la clientèle pour des innovations dans ce domaine.

### PRESENTATION DE L'INVENTION :

L'invention propose de pallier à ces inconvénients.

Il s'agit donc de réaliser un tableau de bord dont la structure est plus simple et plus compacte que dans les tableaux de bord conventionnels.

L'invention a également pour objectif de réaliser un tableau de bord dont l'esthétique diffère des tableaux de bord conventionnels.

On propose selon l'invention un tableau de bord de véhicule automobile comprenant une boite à lumière, des moyens indicateurs, et un élément de boitier de façade, ledit tableau de bord étant **caractérisé en ce que** ladite boite à lumière est au moins en partie visible du conducteur dudit véhicule automobile, ladite boîte à lumière étant éclairée, et en ce que ladite boîte à lumière comprend des cavités ayant une forme globalement de calotte sphérique comprenant des sources d'éclairage et dans lesquelles sont disposés lesdits moyens indicateurs.

Un avantage de l'invention est que le tableau de bord selon l'invention permet l'utilisation de moyens indicateurs, par exemple d'aiguilles, qui peuvent avoir une structure simple, et en particulier ne doivent pas nécessairement conduire la lumière.

L'invention concerne également un véhicule automobile comprenant un tel tableau de bord.

### PRESENTATION DES FIGURES :

D'autres caractéristiques, buts et avantages de l'invention ressortiront de la description qui suit, qui est purement illustrative et non limitative, et qui doit être lue en regard des dessins annexés, sur lesquels :
La figure 1 présente une vue éclatée d'un tableau de bord conventionnel de véhicule automobile.
La figure 2 présente une vue éclatée d'un autre mode de réalisation de tableau de bord conventionnel.
La figure 3 présente une boîte à lumière de tableau de bord conventionnel de véhicule automobile.
La figure 4 présente une vue éclatée d'un tableau de bord de véhicule automobile selon l'invention.
La figure 5 présente une boîte à lumière de tableau de bord de véhicule automobile selon l'invention.
La figure 6 présente un autre mode de réalisation de la boite à lumière selon l'invention.
La figure 7 présente une vue de face d'un tableau de bord de véhicule automobile selon l'invention.
La figure 8 présente une vue de face d'un autre mode de réalisation d'un tableau de bord de véhicule automobile selon l'invention.
La figure 9 présente une vue d'une partie d'un tableau de bord de véhicule automobile selon l'invention.
La figure 10 présente une vue en coupe d'une partie d'un tableau de bord de véhicule automobile selon l'invention.
La figure 11 présente une vue de moyens indicateurs à aiguille conformes à la présente invention.
La figure 12 présente un autre mode de réalisation de boite à lumière selon l'invention.
La figure 13 présente un autre mode de réalisation de boite à lumière selon l'invention.
La figure 14 présente un autre mode de réalisation de boite à lumière selon l'invention.
La figure 15 présente un autre mode de réalisation de boite à lumière selon l'invention.

### DESCRIPTION DETAILLEE :

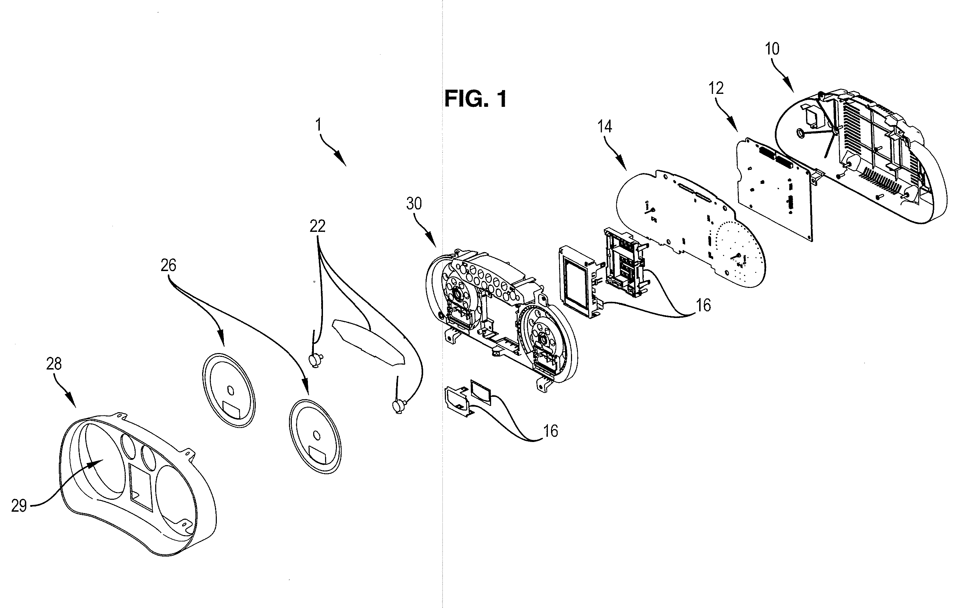

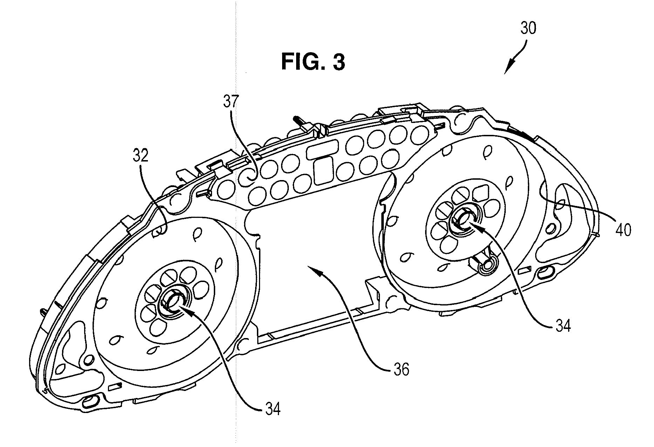

La figure 1 présente une vue éclatée d'un tableau de bord 1 conventionnel.
Le boîtier est composé d'un élément de boitier arrière 10, et d'un élément de boitier avant 28 comportant une paroi transparente ou vitre 29 en façade. Les autres composants sont logés entre ces deux éléments de boitier 10 et 28.
On loge donc entre ces deux éléments de boitier 10 et 28 un premier circuit imprimé 12, un second circuit imprimé 14 formant support de sources lumineuses, par exemple de diodes, une boîte à lumière 30, des moyens d'affichage 16 par exemple de type afficheur LCD, des moyens indicateurs 22 à aiguille et des cadrans 26 associés à ces indicateurs.
Le support de diodes 14 comporte des diodes disposées de manière à être insérées dans des orifices prévus à cet effet dans la boite à lumière 30. On peut voir ces orifices 32 plus précisément sur la figure 3, présentée ci-après.

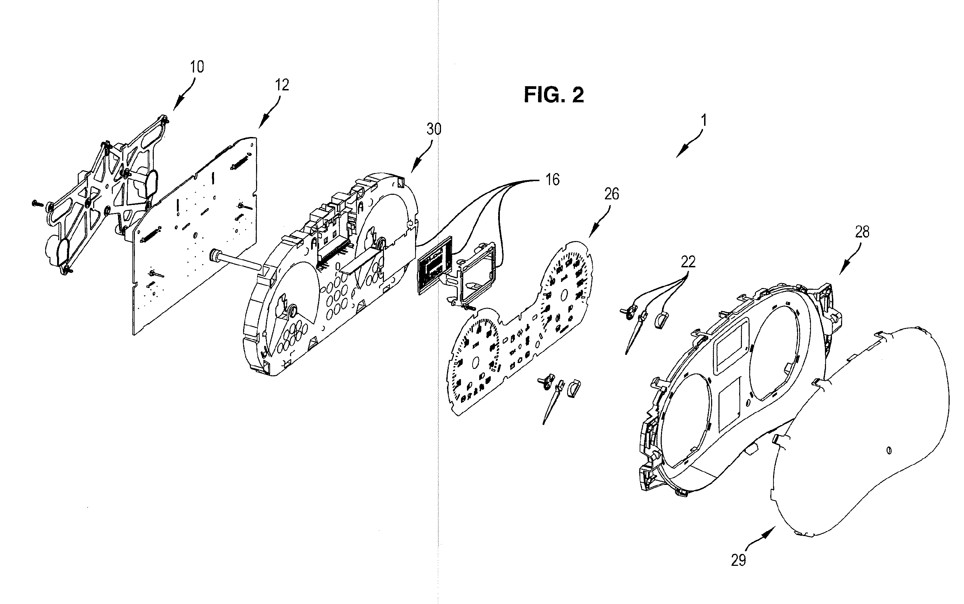

La figure 2 présente une vue éclatée d'un autre mode de réalisation de tableau de bord conventionnel.
Le boîtier est composé d'un élément de boitier arrière 10, et d'un élément de boitier avant 28 sur lequel est montée une paroi transparente ou vitre 29 en façade. Les autres composants sont logés entre ces deux éléments de boitier 10 et 28.
On loge donc entre ces deux éléments de boitier 10 et 28, un circuit imprimé 12 formant support de sources lumineuses, par exemple de diodes, et sur lequel sont fixés des éléments moteurs 25, une boîte à lumière 30, des moyens d'affichage 16 par exemple de type afficheur LCD, des moyens indicateurs 22 à aiguille et un masque opaque 26, intégrant les deux cadrans présentés sur le mode de réalisation de la figure 1 associés à ces indicateurs.
Le support de diodes 14 comporte des diodes disposées de manière à être insérées dans des orifices prévus à cet effet dans la boite à lumière 30. On peut voir ces orifices 32 plus précisément sur la figure 3, présentée ci-après.

La figure 3 présente une boite à lumière 30, comportant des orifices 32 par lesquels sont insérées les diodes disposées sur le support de diodes 14, des orifices 34 pour la mise en place des moyens indicateurs 22 et pour guider des diodes pour l'éclairage des moyens indicateurs 22, et un emplacement central 36 pour la mise en place de moyens d'affichage 16, ainsi que différentes cheminées 37 dans la partie centrale pour l'affichage de divers voyants. La boite à lumière 30 comporte également deux cavités tubulaires 40, dont la section correspond à la section des cadrans 26. Les cadrans 26 sont montés au niveau des cavités 40.

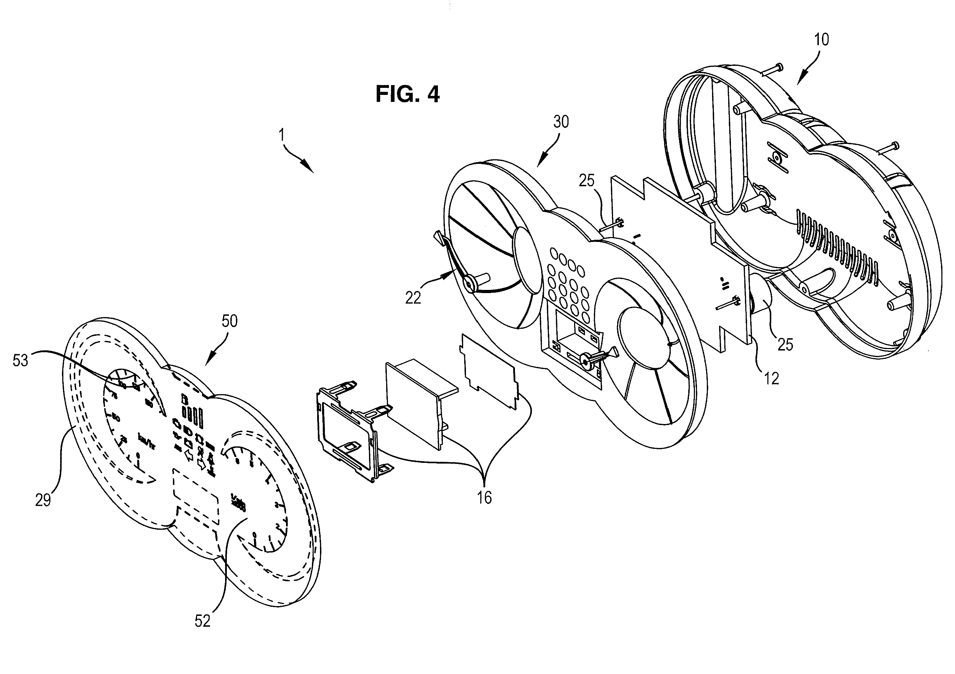

La figure 4 présente une vue éclatée d'un tableau de bord 1 selon l'invention comprenant une boite à lumière 30 selon l'invention. Le boitier est ici composé d'un élément de boitier arrière 10 et d'un élément de façade 50.
On loge entre ces deux éléments de boitier 10 et 50, un circuit imprimé 12, la boite à lumière 30, des moyens indicateurs 22 à aiguille et des moyens d'affichage 16 de type LCD.
L'élément de façade 50 remplace selon l'invention l'élément de boitier avant 28, la vitre 29 et les cadrans 26 des tableaux de bord conventionnels. On a donc trois pièces condensées en une seule. L'élément de façade 50 correspond ici à une vitre transparente, sur laquelle sont imprimées différentes zones et motifs correspondant aux indicateurs et aux cadrans.
On remarque ainsi la simplification du tableau de bord 1 conforme à l'invention, tel qu'illustré sur la figure 4, dont le nombre d'éléments a été réduit par rapport aux tableaux de bord conventionnels des figures 1 ou 2.
La forme générale de l'ensemble est un contour oblong ovale, ayant globalement la forme d'un hippodrome.

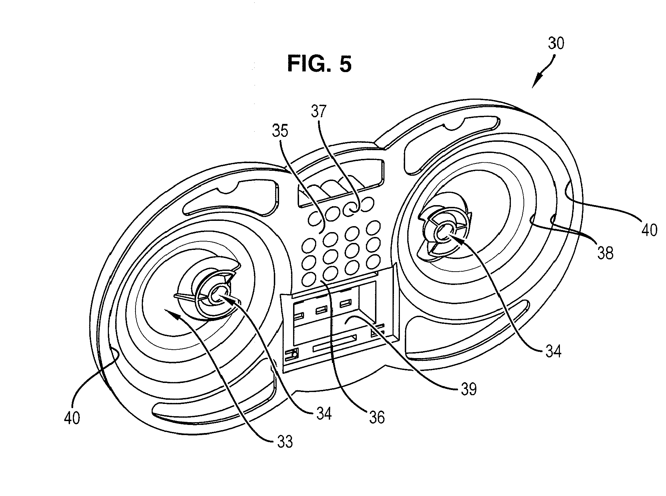

La figure 5 présente une boite à lumière 30 de tableau de bord 1 selon l'invention.
On retrouve la forme générale d'hippodrome décrite précédemment pour cet élément particulier, et on peut subdiviser l'élément en trois plages : deux plages latérales comprenant des cavités 40, et une plage centrale 36 dédiée à la fonction d'affichage.
On retrouve les orifices 34 pour la mise en place des moyens indicateurs 22, et l'emplacement central 36 pour la mise en place des moyens d'affichage 16.
Les cavités 40 ont globalement une forme de calotte sphérique, concave vers l'avant dont les centres ne coïncident pas avec les centres des orifices 34 pour la mise en place des moyens indicateurs 22. Selon un autre mode de réalisation, les centres des cavités 40 et des orifices 34 peuvent coïncider. On accentue ainsi l'aspect esthétique de l'ensemble par un effet de relief 3D. Sur la surface interne des cavités 40 se trouvent des motifs 38, ayant ici la forme de deux bossages circulaires de diamètres différents l'un de l'autre. Selon un autre mode de réalisation de l'invention, la surface interne des cavités 40 ne comprend pas de motifs.
Les orifices 32 présentés sur la figure 3 ne sont plus présents ; on trouve cependant une ouverture 33 en forme de croissant bombé vers la périphérie, sensiblement au centre de chaque cavité 40. Une source lumineuse peut être placée au niveau de ces ouvertures 33. On utilise ainsi une source unique pour chaque cavité, dont la lumière est réfléchie par les parois des cavités 40 afin d'éclairer l'ensemble de la cavité sans avoir à recourir à une multitude de diodes.
La plage centrale 36 présentée comporte deux sous parties ; une sous partie inférieure 39 servant de logement pour des moyens d'affichage LCD 16, et une partie supérieure 35 comprenant différentes cheminées 37 pour l'affichage de divers voyants. Ces cheminées sont combinées avec des diodes disposées sur le circuit imprimé 12, et des icones 54 (visibles sur les figures 4, 7 et 8) imprimées sur l'élément de façade 50 pouvant être éclairées par lesdites diodes, pour afficher les différents états du véhicule. On place de manière conventionnelle dans cette partie supérieure les voyants pour les clignotants, les feux de position, de croisement et de route, les alertes moteur, le niveau d'essence, et tout autre indicateur de statut du véhicule. On comprendra que les différents éléments de la plage centrale ne sont pas limités à cet agencement, et peuvent être disposés selon de multiples arrangements.

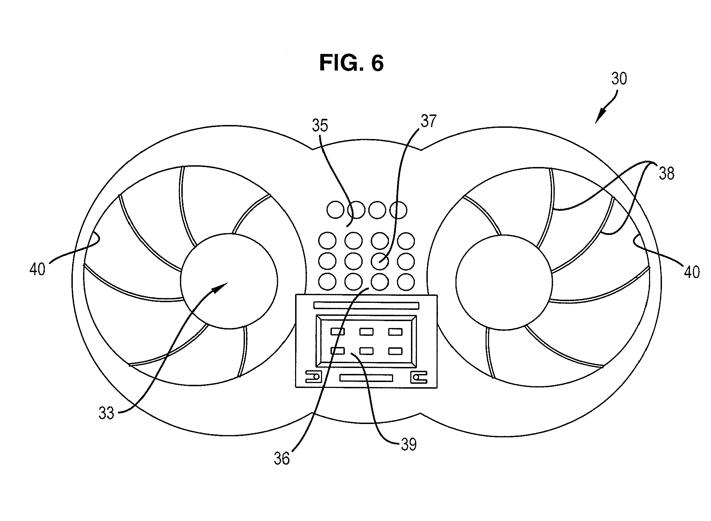

La figure 6 présente un autre mode de réalisation de la boite à lumière selon l'invention.
On retrouve les éléments présentés sur la figure 5, avec toutefois plusieurs modifications.
Les motifs 38 se trouvant sur la surface interne des cavités 40 ont ici une forme différente ; ce sont des bossages de forme héliocoïdale, équirépartis dans la partie visible de la boite à lumière 30.

Par ailleurs, les orifices 34 ne sont pas présents dans ce mode de réalisation ; seules les ouvertures 33 sont présentes, et servent à la fois à l'insertion de sources lumineuses et à l'insertion de moyens indicateurs.

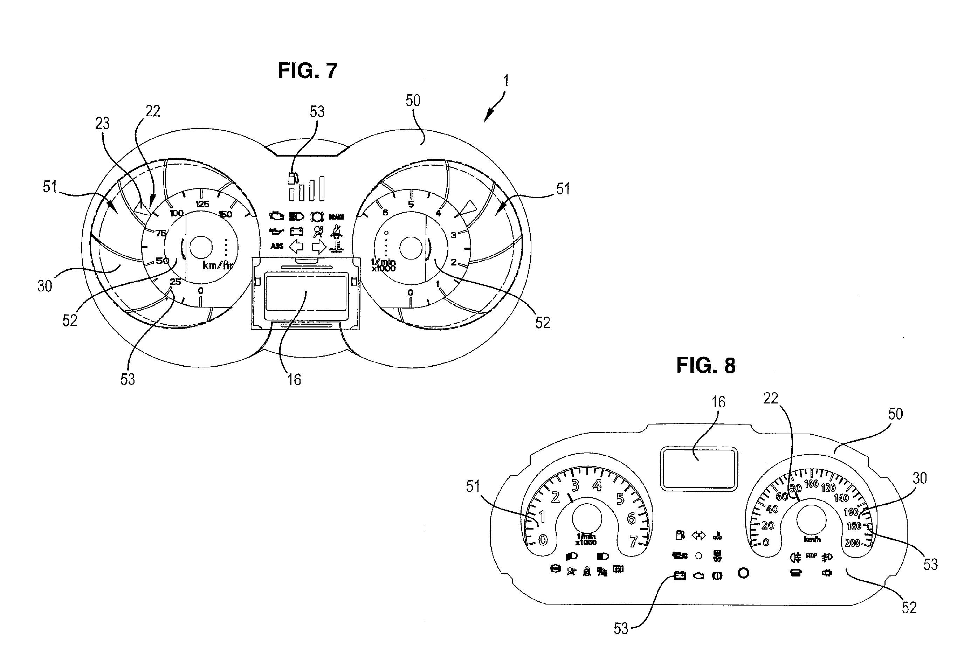

La figure 7 présente une vue de face d'un tableau de bord selon l'invention. On voit ici les parties visibles 51 de la boite à lumière 30 au travers des orifices de l'élément de façade 50.
On voit que l'élément de façade 50 comporte deux zones globalement circulaires 52, sur lesquelles se trouvent des parties imprimées 53 opaques. Ces zones globalement circulaires 52 ont un diamètre inférieur à celui des cavités 40, et masquent donc partiellement les cavités 40 de la boite à lumière 30, et sont centrées sur les orifices 34, eux-mêmes excentrés par rapport au centre des cavités 40. Il en résulte des parties visibles 51 ayant globalement une forme de croissant, situées sur le contour extérieur des zones latérales de la boite à lumière 30. Selon un autre mode de réalisation de l'invention, les zones 52 ne sont pas nécessairement centrées sur les orifices 34, ce qui permet d'engendrer des effets de style. On comprendra également les que les zones 52 peuvent avoir d'autres formes, ce qui fait varier la forme des parties visibles 51 de la boite à lumière 30, qui ne se limite dont pas à une forme de croissant.
Sur la figure, on constate qu'approximativement 50% des cavités 40 de la boite à lumière 30 est visible. La partie visible 51 peut cependant être plus ou moins importante, mais afin d'obtenir un effet visuel marquant, au moins 30% des cavités 40 de la boite à lumière 30 doit être visible.
On voit également les moyens indicateurs 22 comprenant un pointeur opaque 23 situé en périphérie des zones globalement circulaires 52, et désignant les parties imprimées 53. Le pointeur étant disposé sur la partie visible 51 de la boite à lumière 30, il ne nécessite pas d'éclairage particulier. En effet, le contraste avec les cavités 40 de la boite à lumière 30, associé à un éclairage des cavités provenant du centre desdites cavités confère un effet visuel suffisant pour une bonne visibilité.
On voit également sur cette figure la plage centrale 36 et ses deux sous parties ; la sous partie inférieure 39 servant de logement pour les moyens d'affichage LCD 16, et la sous partie supérieure 35 les voyants constitués des impressions 53.

La figure 8 présente une vue de face d'un autre mode de réalisation d'un tableau de bord selon l'invention. On retrouve les éléments présentés sur la figure 7, mais dans un agencement différent ; Les sous parties de la plage centrale 36 sont inversées ; les moyens d'affichage LCD 16 sont en partie supérieure, tandis que les impressions 53 sont dans la partie inférieure. L'agencement des différentes parties de l'élément de façade 50 est également modifié ; les parties visibles 51 et les zones opaques 52 confèrent ainsi un aspect différent à l'ensemble. Les parties visibles 51 ont ici une forme de demi-couronne, convexe vers le haut. Dans ce mode de réalisation, les impressions 53 situées au niveau des plages latérales de l'élément de façade 50 ne sont pas imprimées sur les zones opaques 52, mais sont imprimées au niveau des parties visibles 51.
Les moyens indicateurs 22 ont une forme différente des moyens indicateurs présentés sur la figure 7 ; ils sont ici constitués d'une aiguille droite, comprenant des zones opaques et des zones transparentes, les zones transparentes permettant de laisser visibles les impressions 53 sur les parties visibles 51 lorsque l'aiguille est superposée avec lesdites impressions 53, tandis que les zones opaques de l'aiguille permettent de désigner lesdites impressions 53 sur les parties visibles 51.

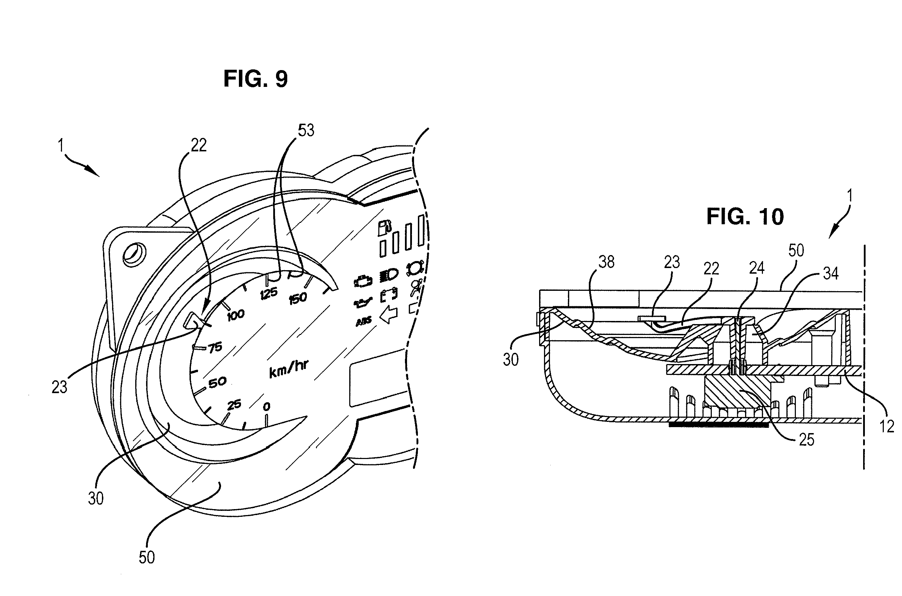

La figure 9 présente une vue d'un tableau de bord 1 selon l'invention comprenant une boite à lumière 30 selon l'invention.
On remarque la partie visible de la boite à lumière 30, qui permet de disposer l'index ou pointeur 23 des moyens indicateurs 22 dans cette partie visible de la boite à lumière 30. Les moyens indicateurs 22 comprennent un pointeur opaque 23, coloré de manière à contraster avec l'éclairage de la boite à lumière 30. Le pointeur opaque 23 des moyens indicateurs 22 va désigner les parties imprimées 53 situées dans les zones (52) correspondant aux cadrans des tableaux de bord conventionnels de l'élément de façade 50.

La figure 10 présente une vue en coupe d'une partie d'un tableau de bord 1 selon l'invention. On voit sur cette figure la boite à lumière 30, les moyens indicateurs 22, et l'élément de boitier de façade 50.
Les moyens indicateurs 22 ont leur axe de rotation 24 disposé dans l'orifice 34, et sont entrainés en rotation par un élément moteur 25 disposé sur le circuit imprimé 12.
On remarque la forme et le positionnement des moyens indicateurs 22 par rapport à l'élément de façade 50 ; les moyens indicateurs 22 et en particulier le pointeur 23 sont légèrement décalés vers l'arrière par rapport à l'élément de façade 50.
On remarque par ailleurs que la partie centrale des cavités 40 peut prendre d'autres formes ; l'orifice 34 n'est pas nécessaire, et la partie centrale des cavités 40 peut consister uniquement en une forme différente de l'ouverture 33 présentée sur la figure 5.

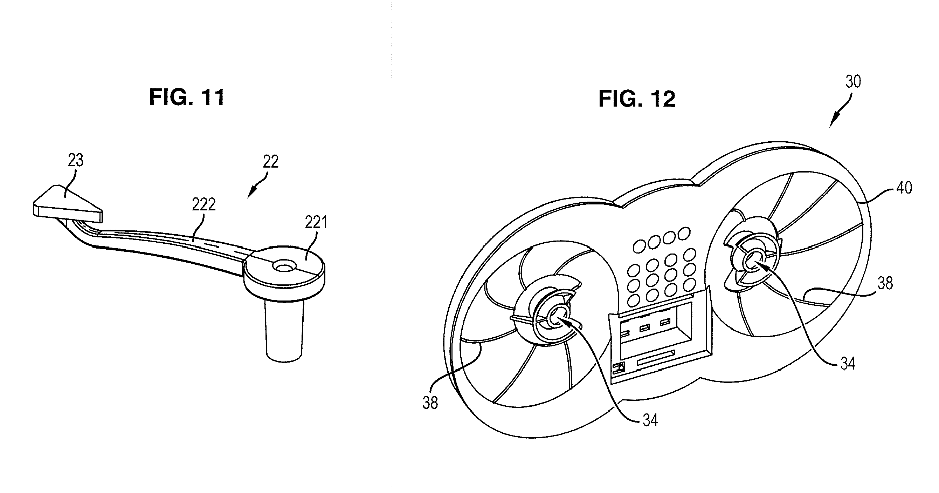

La figure 11 présente une vue des moyens indicateurs 22, comprenant une partie centrale 221 formant moyeu fixé sur l'arbre de sortie 24 de l'élément moteur 25, une tige 222 globalement radiale par rapport à l'axe de rotation, et le pointeur opaque 23 placé à l'extrémité de la tige 222 via un bras dirigé vers l'avant. Ici, le pointeur ou index 23 a la forme d'un triangle dont la pointe est dirigée radialement vers l'intérieur, en direction des indications 53 imprimées sur les zones 52 de l'élément de façade 50 correspondant aux cadrans. La partie centrale est percée pour permettre l'insertion de l'axe 24 de l'élément moteur 25. La tige 222 à l'extrémité de laquelle est positionné le pointeur opaque 23 a une forme incurvée, concave vers l'avant.
Les moyens indicateurs ont ici une structure simple, et ne comprennent pas de moyens conduisant la lumière.

Les moyens indicateurs ne sont pas limités à cette forme, et peuvent prendre d'autres formes, comme par exemple la forme visible sur la figure 8.

La figure 12 présente une variante de l'invention, dans laquelle les motifs 38 situés sur la surface interne des cavités 40 de la boite à lumière 30 selon l'invention ont une forme hélicoïdale. Sur cette figure, on a représenté 6 bossages de forme hélicoïdale disposés sur la surface interne de chaque cavité 40. Dans chaque cavité, les bossages hélicoïdaux ont pour centre l'orifice 34, et sont disposés équirépartis dans les parties des cavités 40 correspondant aux zones visibles 51 en forme de croissant présentées sur la figure 7. Selon un mode de réalisation de l'invention, les bossages ont une épaisseur de l'ordre de 0.5 à 3 mm.

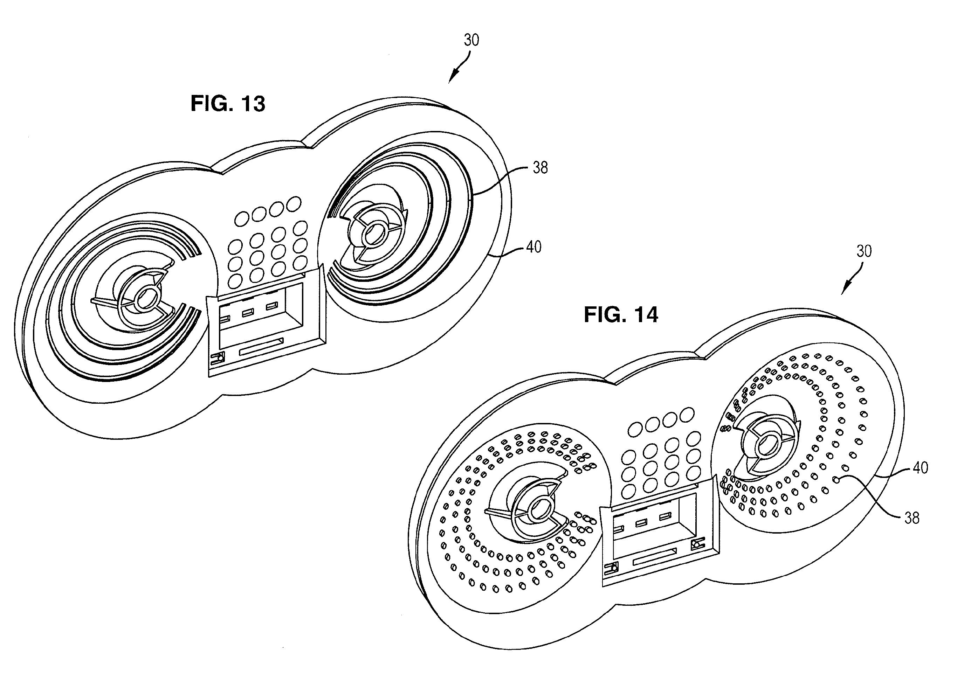

La figure 13 présente une variante de l'invention, dans laquelle les motifs 38 situés sur la surface interne des cavités 40 de la boite à lumière 30 selon l'invention sont des bossages circulaires. Sur cette figure, on a représenté trois bossages circulaires disposés sur la surface interne de chaque cavité 40. Les trois bossages ne sont pas concentriques, afin d'accentuer l'effet optique dans la partie visible. Par ailleurs, les bossages forment un secteur de l'ordre de 320°, et non pas des cercles complets; une partie de la zone masquée par les zones circulaires 52 représentées sur la figure 7 ne comprend pas de bossages, ces zones n'étant pas visibles par le conducteur du véhicule automobile. Selon un mode de réalisation de l'invention, les bossages ont une épaisseur de l'ordre de 0.5 à 3 mm.

La figure 14 présente une variante de l'invention, dans laquelle les motifs 38 situés sur la surface interne des cavités 40 de la boite à lumière 30 selon l'invention sont des perçages. Selon un mode de réalisation de l'invention, les perçages ont un diamètre de l'ordre de 0.5 à 3 mm. Les perçages sont disposés sur la surface interne de chaque cavité 40 sur trois plages, les plages correspondant à des cercles de diamètres différents, non concentriques, de forme semblable à la forme des bossages présentés dans la figure 13. On retrouve également des zones sans motif, correspondant aux zones masquées par les éléments 52 représentés sur la figure 7, qui ne sont donc pas visibles du conducteur du véhicule automobile. Selon un autre mode de réalisation de l'invention, les motifs peuvent être similaires, mais sous la forme de bossages ou de saillies au lieu de perçages.

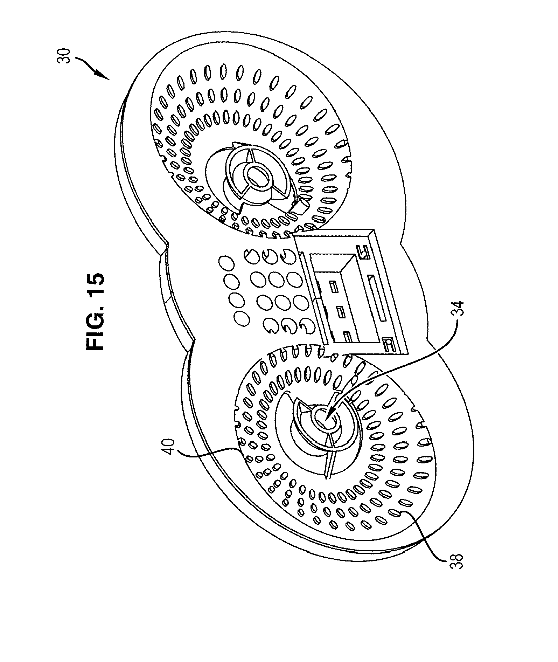

La figure 15 présente une variante de l'invention, dans laquelle les motifs 38 situés sur la surface interne des cavités 40 de la boite à lumière 30 selon l'invention sont des rainures oblongues. Selon un mode de réalisation de l'invention, les rainures ont des dimensions de l'ordre de 0.5 à 5 mm. Sur la figure sont représentées deux séries de rainures disposées radialement sur la surface interne de chaque cavité, chaque cavité 40 comporte deux séries de rainures, lesdites séries ayant la forme de cercles de diamètres différents, et ayant pour centre l'orifice 34.
Les motifs peuvent par ailleurs prendre d'autres formes diverses, générant un effet d'éclairage dans les cavités (40). Selon un autre mode de réalisation de l'invention, les motifs peuvent être similaires, mais sous la forme de bossages ou de saillies au lieu de rainures.

## Revendications

1. Tableau de bord (1) de véhicule automobile comprenant une boite à lumière (30), des moyens indicateurs (22), et un élément de boitier de façade (50), ledit tableau de bord (1) étant **caractérisé en ce que** ladite boite à lumière (30) est au moins en partie visible (51) du conducteur dudit véhicule automobile, ladite boîte à lumière (30) étant éclairée, et **en ce que** ladite boîte à lumière (30) comprend des cavités ayant une forme globalement de calotte sphérique (40) comprenant des sources d'éclairage et dans lesquelles sont disposés lesdits moyens indicateurs (22).

2. Tableau de bord (1) de véhicule automobile selon la revendication 1, **caractérisé en ce qu'**au moins 30% des cavités (40) de la boite à lumière (30) est visible du conducteur du véhicule automobile.

3. Tableau de bord (1) de véhicule automobile selon l'une des revendications précédentes **caractérisé, en ce que** ladite boite à lumière (30) comprend dans sa ou ses parties visibles des motifs (38) qui engendrent des effets lumineux.

4. Tableau de bord (1) de véhicule automobile selon la revendication 3 **caractérisé en ce que** lesdits motifs (38) sont disposés sur la surface interne des cavités (40) de la boite à lumière (30) et sont choisis parmi le groupe suivant :
- bossages disposés selon des cercles concentriques, ou
- bossages de forme hélicoïdale disposés radialement, ou
- perçages circulaires disposés selon des séries, lesdites séries ayant la forme de cercles de diamètres variables, ou
- bossages circulaires disposés selon des séries, lesdites séries ayant la forme de cercles de diamètres variables, ou
- perçages oblongs disposés radialement selon des séries, lesdites séries ayant la forme de cercles de diamètres variables, ou
- bossages oblongs disposés radialement selon des séries, lesdites séries ayant la forme de cercles de diamètres variables.

5. Tableau de bord (1) de véhicule automobile selon l'une des revendications précédentes **caractérisé en ce que** l'élément de façade (50) est une paroi transparente comprenant des parties imprimées (53) correspondant aux indicateurs de statut du véhicule, et des zones transparentes (51) au travers desquelles la boîte à lumière (30) est visible.

6. Tableau de bord (1) de véhicule automobile selon l'une des revendications précédentes **caractérisé en ce que** lesdits moyens indicateurs (22) comprennent un bras (222) disposé derrière l'élément de façade (50) à l'extrémité duquel est disposé un pointeur (23) opaque, disposé en vis-à-vis des parties imprimées (53).

7. Tableau de bord (1) de véhicule automobile selon l'une des revendications 5 ou 6 **caractérisé en ce que** la ou lesdites partie(s) visible(s) (51) de ladite boite à lumière (30) sont situées en périphérie des parties imprimées (53) de l'élément de façade (50).

8. Tableau de bord (1) de véhicule automobile selon la revendication 6 **caractérisé en ce que** le bras (222) a une forme incurvée, concave vers l'avant.

9. Véhicule automobile comprenant un tableau de bord (1) selon l'une des revendications précédentes.
